(19) Europäisches Patentamt
European Patent Office
Office européen des brevets

(11) EP 2 201 064 B1

# (12) EUROPEAN PATENT SPECIFICATION

(45) Date of publication and mention of the grant of the patent:
**16.03.2016 Bulletin 2016/11**

(21) Application number: **08839790.6**

(22) Date of filing: **14.10.2008**

(51) Int Cl.:
***C08L 51/06*** (2006.01) ***C08F 8/32*** (2006.01)
***C08F 8/14*** (2006.01)

(86) International application number:
**PCT/HU2008/000123**

(87) International publication number:
**WO 2009/050526 (23.04.2009 Gazette 2009/17)**

## (54) POLYFUNCTIONAL COMPATIBILIZING ADDITIVE PACKAGE OF PLASTIC AND RUBBER COMPOSITES AND METHOD OF MAKING THE SAME

MULTIFUNKTIONELLES VERTRÄGLICH MACHENDES ZUSATZGEMISCH AUS KUNSTSTOFF- UND KAUTSCHUKVERBUND UND HERSTELLUNGSVERFAHREN DAFÜR

ENSEMBLE D'ADDITIFS POLYFONCTIONNELS FAVORISANT LA COMPATIBILITÉ POUR COMPOSITES PLASTIQUES ET CAOUTCHOUC ET SON PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.10.2007 HU 0700680**

(43) Date of publication of application:
**30.06.2010 Bulletin 2010/26**

(73) Proprietor: **Pannon Egyetem**
**8200 Veszprém (HU)**

(72) Inventors:
- **BARTHA, László**
  **H-8200 Veszprém (HU)**
- **MISKOLCZI, Norbert**
  **H-8200 Veszprém (HU)**
- **VARGA, Csilla**
  **H-8227 Felsöörs (HU)**

(74) Representative: **Derzsi, Katalin**
**SBG&K Patent and Law Offices,**
**Andrássy ut 113**
**1062 Budapest (HU)**

(56) References cited:
**WO-A-2007/068990 US-A- 4 252 701**
**US-A- 5 965 667**

- **EL-SABBAGH S H ET AL: "Utilisation of maleic anhydride and epoxidised soyabean oil as compatibilisers for NBR/EPDM blends reinforced with modified and unmodified polypropylene fibres" PIGMENT & RESIN TECHNOLOGY,, vol. 34, no. 4, 1 January 2005 (2005-01-01), pages 203-217, XP009113040 ISSN: 0369-9420**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 201 064 B1

## Description

The subject of the present invention relates to the low molecular weight compatibilizing additive package having further advantageous effects, which improves the compatibility of different thermoplastic and/or thermosetting polymers and/or fillings, functional additives just as composites containing natural and/or artificial strengthening fibres, and relates to its preparation and application processes.

In the last decades it has been typical in different industries to replace mental structural materials produced with high energy consumption by plastic materials. Accordingly plastic composites with better and better mechanical and chemical properties have been developed. Nowadays various additives are used to fulfil various requirements of products in these composites as filling and colouring materials, antioxidants, UV stabilizers, flame retardants, plasticizers and strengthening fibres, etc. Besides it is frequently required to use mixtures of polymers chemically different in structure. In the last two decades numerous compatibility improving, i.e compatibilizing additives have been developed for the production of such multi-component composites to promote compatibility of several types of the so called back-bone polymers and other components, e.g. additives, fibres, and filling materials containing polar groups, etc. (US 5,959,032).

Generally the compatibilizing additives are high or low molecular weight polymers having similar structure to the so called back-bone polymer gibing the main component of the composite that are functionalized by polar compounds, which can physically and chemically interact with the different kinds of components of the composites through their polar and apolar groups, providing the required processing and mechanical properties.

According to processes producing the known compatibilizing additives (US 5,414,081), generally so called back-bone polymers are used as raw material that are of high molecular weight ($\overline{M}_w = 10^5$-$10^6$) and structurally similar to the polymer components of the composites as .e.g. polypropylene, low and high density polyethylene, ethylene -- $\alpha$-olefin copolymers, polyalkyl acrylates and polyalkyl polymethacrylates, polystyrene and ethylene vinylacetate copolymers or different known elastomers as e.g. styrene butadiene or styrene isoprene copolymers.

During the preparation of the compatibilizing additives functional groups were formed on the chains of the above mentioned polymers by reaction with different chemical reagents, which could interact with polymer molecules containing similar kind of chemical groups in significant ratio.

At first polymer functionalization was realized by radical initiated chlorination or methods based on oxidation by oxygen or hydrogen-peroxide, which were used to produce chlorinated polyethylene and either epoxydated or oxydated polyolefins. Disadvantages of that kind of processes are the low thermal stability of chlorine containing polymers mixed into the final product, and the formation of significant amounts of toxic hydrochloric acid during thermal decomposition. The resin type materials obtained in the oxidative processes were often corrosive and it was hard to reproduce them, their structure being far too complicated, composed of various functional groups. Therefore in further processes with radical or thermal initiated reactions, especially for grafting of back-bone polymer, other reagents were used as unsaturated carboxylic acids, e.g. maleic acid, fumaric acid, acrylic acid, methacrylic acid or their anhydrides, or chlorides or bromides of unsaturated acids, e.g. vinyl benzyl chloride, vinyl benzyl bromide, or unsaturated carboxylic esters as alkyl acrylate or alkyl methacrylate. There are numerous processes among the listed ones, which use maleic acid as acidic reagent (US 5,959,032).

Efforts were made to improve the compatibility of polymers containing acidic functional groups to polymers containing mainly apolar or basic groups, as e.g. polyamides and other apolar polymers (US 6,451,919).

H. Farah at all (US 6,469,099) produced hydrocarbon polymers containing amine reactive groups to improve compatibility of polyurethanes and polymers containing carboxylic-, or hydroxyl functional groups with filling materials or strengthening fibre materials, apolar polymers or other apolar additives, or other components. Compatibilizing additives containing basic functional groups are obtained by reacting these polymers with alkyl amines, polyamines, hydroxyl amines and polyether amines, or polyether amides,

For commercial production of high molecular weight compatibilizing additives the twin-screw, the so called reactive extrusion, traditionally used mainly in polymer processing were applied (US 6,469,099), whereby generally 5-10%, but at most 40% conversion referred to the back-bone polymer could be realised depending on the severity of conditions. The non-reacted polymers are mixed and dissolved into the composites that might have more or less influence on the properties of the end-product depending on the type of the polymer. As a result of functionalization reactions the functional groups are linked to the back-bone polymer chain in statistical distribution. Such products with compatibilizing effect can be directly used for polymer composite preparation, or can be reacted for building the necessary functional group structure with low molecular weight basic or acidic compounds during preparation of polymer composites or further reactive extrusion.

S. Moriya at all (EP 1,275,670 A1) prepared compatibilizer with high chemical and mechanical stability and significant improving effect on processing and application properties from $C_2$-$C_{20}$ olefins ($\overline{M}_n \leq 2000$), or homo-, or copolymers of such olefins, and from polymers containing ester-, ether-, amide-, imide-, urethane etc. groups, or by the multi-step reaction of an unsaturated hydrocarbon ($\overline{M}_n \leq 500$) and other poplar compounds.

Compatibilizing additives are used in master mixtures or directly, generally in 3-40 %, preferably in 2-10 % concentration by the usual, mixing technology for polymer composites. A properly directed orientation of the compatibilizing additive takes place in the melt phase, resulting in the formation of transient films bonded chemically or physically to the surface of polymers with different chemical characteristics dispersed in each other, and on the surface of other components assuring compact coordination and cohesion.

According to our research and development work in this field it was discovered, that the application of the known, traditional compatibilizers involves the following drawbacks:

a) In case of the majority of high molecular weight ($\overline{M}_n > 10^5$) back-bone hydrocarbon polymers used for manufacturing the compatibilizing additives the reactivity is generally low because of the low concentration of reactive double bonds. However, reactivity can be increased in a limited degree by radical initiators, but only 5-40 % of the polymer feed converts to surface active agents as the result of given reactions. The remaining unreacted polymer part in significant concentration getting into the composite causes dilution, and in unfavourable case it deteriorates mechanical properties. Besides the required effect can be achieved only at relatively high concentrations of compatibilizers of low active material content, which reduces economy of application.

b) Substitution or monomer grafting reactions applied during the procedure result in random distribution of functional groups along the chain, which causes wide fluctuation of the surface active effect of the manufactured end-product. The same phenomena can be caused by the wide molecular weight distribution of the raw polymer as well, and may significantly limit solubility of different components in each other, too.

c) Some unreacted compounds of low molecular weight and significant softener effect remain in the compatibilizers of low molecular weight that have been developed so far, because of the significantly lower conversion than 100 % of the addition reactions taking place during their manufacturing process, which worsens the mechanical properties of the final product.

During our research and development work on surface active polymers it was concluded, that by selective grafting of $\alpha$-olefins of high reactivity having an average carbon number between $C_{22}$-$C_{36}$, or of a hydrocarbon polymer containing more than 80 % $\alpha$-olefin and of an average molecular weight significantly lower than usual ($\overline{M}_n \leq 3000$), preferably polyisobuthylene with highly reactive monomers or mixtures of highly reactive monomers, then, if needed, by further chemical modification of the functional groups of the formed intermediates, and by the simultaneous application with an unsaturated fatty acid ester-dicarboxylic acid adduct of high acid number or its ester-, ester amide-, amide-, or imide derivatives results in the so called polyfunctional products differing in structure from the known compatibilizing additives and have lower molecular weight, but have higher and various favourable effects. While examining correlations among the possible additive structures and their effects a surprising fact was discovered, namely that by the simultaneous use of additives meeting the demand of several molecular structure requirements and being capable of post addition reactions, the above listed disadvantages of the known products could be significantly reduced. According to this invention compatibilizing additives can be synthesized that are more effective than the known products and are capable of post polymerization within the conditions of plastic composite manufacturing processes, and are effective in far lower concentration than usual and with their use such plastics and/or rubber composites can be produced that have not been prepared by traditional additives and processes so far. Besides, the compatibilizing package by the present invention surprisingly facilitates the dispersion in polymers or keeping in dispersed condition the additional, hard to cover filling or strengthening materials, like carbon fibre, carbon nanotubes, glass fibre, basalt wool, as well as natural fibres as cellulose, wood chips, etc. Furthermore it improves mechanical and other application properties of the prepared end-products. It is concluded, that this kind of additive package can be produced by mixing the following main additive components in proper ratio:

Component "A": According to our invention the compatibilizing additive package for different types of plastic and/or rubber composites contains at least 45-97 % of polar compounds consisting of an apolar hydrocarbon part (APG) and a polar part (POLG) having a number average molecule weight under $\overline{M}_n \leq 3000$, and containing polymer or oligomer structural units, wherein at least 80 % of the polymer or oligomer parts containing the polar groups join the end of the apolar hydrocarbon chain and the molecular weight ratio of the polar and apolar parts of the molecule is APG/POLG=0.5-5.0; furthermore the polar part of the molecule consists of preferably maleic anhydride and the ester-, amide-, imide etc. derivatives of dimers or alternating copolymer of hydrocarbon monomers containing olefinic double bonds, having at least two carboxylic groups, which contains per molecule at least one free hydroxyl-, and/or amino-, and/or imino-, and/or carboxylic-, and/or acidic anhydride groups. The active material content of the above described component "A" is more than 80 %.

Component "B": According to our invention the compatibilizing additive package contains reactive vegetable fatty acid and/or fatty acid ester in 1-30 % concentration, which contains In structure per molecule at least one olefinic

double bond, or functional groups for ester and/or amide bonds as e.g. carboxylic-, acidic anhydride-, or hydroxyl-, amino-, imino groups, and by reacting with other reagents and/or component "A", chemical bonds are formed and so the flexibility and mechanical strength of such additive containing disperse composite can be significantly improved. The proposed mass ratio of components "A" and "B" in the compatibilizing additive package (A/B) is 5-90. In addition the compatibilizing additive package may contain other known additives, preferably in 0-40 %, too, improving utilization properties as e.g. antioxidants, corrosion inhibitors, flame retardants, colour stabilizers, colouring materials, plastifiers, and inorganic and organic fillings, and dispersed strengthening fibres or nanotubes.

The preparation of Component "A" by this invention takes place in one or two main steps. In the first step unsaturated hydrocarbon raw material containing double bonds in α-position in more than 80 % is grafted with a copolymer containing maleic anhydride and another comonomer having olefinic double bonds in its structure. During this reaction α-olefins having $C_{22}$-$C_{36}$ average carbon number, or their mixture, or diolefins, or other homo and/or copolymers of aliphatic or aromatic hydrocarbon monomers containing olefinic double bonds, preferably polyisobuthylene in 20-75 % concentration are applied. The reagents are dissolved in a hydrocarbon liquid, with a boiling point preferably at most 160°C, then the solution is heated to 110-140°C and further reacted during 2-10 hours with maleic anhydride, and a $C_4$-$C_{16}$ comonomer containing olefinic double bonds, or with their mixture, by continuous or batch feeding of comonomers, within reaction conditions promoting the formation of alternating chain structure, in the presence of 3-15 % of an organic peroxide initiator related to maleic anhydride, as e.g. di-tert-butyl peroxide, benzoyl-peroxide, cumene hydrogen peroxide, tert-butyl perbenzoate, etc. The next step is the boiling out of the volatile solvent and the unreacted monomers from the reaction mixture in vacuum (0,1-0,5 kPa) between 200-320 °C, then after cooling the acid number of the product is measured. On the basis of the carboxylic group concentration calculated from the acid number the proposed application concentration of the compatibilizing additive is determined. The structure of the hydrocarbon product grafted with the resulted copolymer was identified by FTIR, and proton NMR, or $C^{13}$ NMR, and GPC analyses:

I.

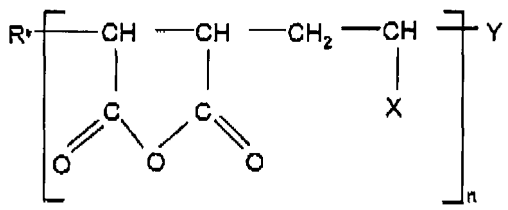

where: R=aliphatic hydrocarbon part (APG), which can be a $C_{22}$-$C_{36}$ α-olefin, or mixtures of such olefins, or the homo or copolymer of other hydrocarbon monomers containing olefinic double bonds with a number average molecular weight under 3000.

X, Y=$C_{2-14}$ aliphatic or aromatic hydrocarbon group or H

n>1, average number of molecular parts containing polar groups bonded to group R.

Component "A" with strong acidic character is applied for improving the compatibility of polymers containing mainly hydroxyl or basic groups, and apolar hydrocarbon polymers. In case of polymers or fillers containing acidic or neutral groups, further chemical conversion of the carboxylic groups of the above described product is necessary. During the above process the compound described by general formula I is reacted for 2-10 hours in 10-70 % hydrocarbon having an average boiling point of less than 150°C, preferably in an aromatic hydrocarbon solvent, in the presence of an acidic or basic catalyst in the 110-180 °C temperature range, or without any catalyst, with a molar ratio of 0.2-1.0 calculated for free carboxylic groups with various reagents, preferably straight or branched $C_3$-$C_{26}$ α-alcohal, alkanol amines, $C_3$-$C_{26}$ alkyl amines, polyalkylene polyamines, amino piperazine, polyalkylene glycols, polyether amines, or aromatic alcohols, or aromatic amines, or their mixtures; as a result ester-, amide-, esteramide-, succinimide-, or polysuccinimide type end-product is prepared, which contains at least one free -OH or $-NH_2$, or -NH polar end groups per molecule, limitedly soluble or insoluble in aliphatic hydrocarbons, from which the solvent and the unreacted components can be boiled out between 100-350 °C in vacuum.

Component "B" is a reaction product of a $C_{16}$-$C_{24}$ fatty acid and/or fatty acid ester containing at least one olefinic double bond grafted with maleic anhydride in a molar ratio of 1-2 related to the olefinic double bonds, or copolymers of maleic anhydride and $C_4$-$C_{24}$ aliphatic olefins, or aromatic hydrocarbon monomers containing olefinic double bonds in a molar ratio of 1:1, or its partly neutralized reaction product obtained by reacting in a molar ratio of 0,3-1 related to the free carboxylic groups with further reagents having a number average molecular weight less than $\overline{M}_n$=600 e.g. polyols,

polyamines, polyalkylene glycols, polyalkylene ether amines, alkanol amines, and their one or two component mixtures, applied in a concentration of 1-30 % related to the compatibilizing additive package. The compatibilizing additive package is homogenized by stirring the mixture of components "A" and "B", then If needed It is supplemented with other known commercial additives and used as homogenized dispersion of solid materials. The cumb-like solid end-product is mixed to the polymer composite to be compatibilized in a concentration of 0.01-5 %. Equipment applied in polymer processing are suitable to use for mixing, as e.g. internal mixer, rolling mill, twin screw extruder, etc. If the aim is to improve the compatibility of strengthening fibres or solid fillings, and a polymer composite, then as an alternative solution compatibilizing additive package containing components "A" and "B" is dissolved in an organic solvent as e.g, toluene, xylene, white spirit, cyclohexane, etc., at a concentration of 1-20 %, and the surface of the strengthening fibres or solid filling materials is covered by the solution of the compatibilizing additive package followed by the evaporation of unnecessary solvent from the solid material at 50-150 °C and preferably at 10-50 kPa absolute pressure.

According to our experiences the additive package having high active material content and lower average molecular weight than usual in such packages, in which component "A" is characterised by containing alternating copolymer chain structure grafted to the end of the apolar hydrocarbon chain, i.e. the additive molecule in one part contains concentrated polar groups, have resulted in higher surface active effect than achieved previously. As a result, it is applied at significantly lower concentration levels as the commercial reference additive, and such extrudable polymer composites are also successfully manufactured, which have not been mentioned in the literature so far.

It is assumed, that additives by the present invention that are strongly polar and of low molecular weight can quickly disperse at the processing temperature of plastic materials because of their higher diffusivity in high molecular weight polymers as well, and by physical or chemical interactions can create good 5 bonding surface layers on polymer/polymer or polymer/solid dispersed phase surfaces, and through their free functional groups they are able to create chemical bonds with each other, or with other known plastic components with cross linking properties, or fillings having stabilizing effect on the polymer composite structure. Besides, owing to their high active material content only a low amount of unreacted diluting component is taken to the composite, which does not deteriorate considerably the mechanical properties of the composite.

During the processing of the composite in the state of plastic melt component "B" shows advantageous slip effect, while its reactive functional groups react with component "A" resulting in the post growth of the average molecular 5 weight of the composite, and the formation of bonds between phases dispersed in each other.

According to our experiments it can be stated, that compatibilizing additives by this invention have got other side effects besides the compatibility assuring main function, like adhesion improving, plastifying (slip), mechanical properties improving, promoting dimensional stability and dyeability.

The utilization advantages of the compatibilizing additive package according to this invention are described in the following manufacturing and application examples.

**Example I. Manufacturing of the α-olefln based component "A"**

In a 1 $dm^3$ volume four necked glass stirring vessel 300 g (1 mol) of a commercial $C_{24}$ α-olefin (α-olefin content is 98 %) is dissolved in 1:1 mass ratio in toluene, then the mixture is heated to 110 °C. 128 g (1.3 mol) of maleic anhydride (MA), 135 g (1.3 mol) of styrene and 13 g of benzoyl peroxide are fed into the mixture in 13 equal parts during 2 hours, under stirring and $N_2$ gas bubbling, with 10 minutes break periods. After 20 minutes post reaction the unreacted volatile components are boiled out of the reaction mixture at 250 °C and 0,2 kPa pressure, and $N_2$ gas bubbling. The acid number of the intermediate obtained is 220 mg KOH/g and the average coupling ratio calculated by mass balance is 1.1 for maleic anhydride related to the α-olefin raw material. In the second step of manufacturing 300 g of intermediate is dissolved in a similar 1 $dm^3$ volume glass vessel in 150 g of xylene at 120 °C while mixing, and a mixture of 0.75 times mol ratio of n-decylalcohol (164 g) calculated from the gmol weight of carboxylic groups determined from the acid number of the intermediate, and of 0.25 times mol ratio of diethylene glycol (31 g) is fed to the solution in 30 minutes, then the reaction mixture is heated to 170 °C and refluxed for 8 hours while continuously boiling out the reaction water. The ceasing of the formation of reaction water indicates the end of the estering process. After that the volatile solvent and unreacted components are boiled out of the reaction mixture at 280 °C and 2 kPa pressure, by $N_2$ gas bubbling. The esterification of carboxylic groups of the maleic acid polymerized into the intermediate product chain in component "A" is detected by the shifts of FTIR absorption peaks of carbonyl groups C=O at wavelengths of 1880 $cm^{-1}$ and 1775 $cm^{-1}$.

The average number of polar succinic anhydride rings polymerized to the side chain of olefin in the intermediate manufactured in the first step (coupling ratio, CR), is calculated by the following equation based on the mass balance of manufacturing and product analysis data:

$$CR = \frac{E \cdot M_{olefin}}{112 \cdot 10^3 - (E \cdot 98.6 + EM_C)}$$

where: CR = coupling ratio, which equals to the average number of maleic anhydride groups coupled to one olefin or polyolefin group
E = acid number, mg KOH/g product
$M_c$ = molecular weight of apolar comonomer
$M_{olefin}$ = number average molecular weight of $\alpha$-olefin or polyolefin raw materials.

The mass ratio of the apolar (APG) and polar parts (POLG) in the molecules is calculated by the following equation:

$$\frac{APG}{POLG} = \frac{M_{olefin}}{CR(M_{MA} + M_C)}$$

$M_{olefin}$ = number average molecular weight of $\alpha$-olefin or polyolefin raw materials
CR = coupling ratio, which equals to the average number of maleic anhydride groups coupled to one olefin or polyolefin group
$M_{MA}$= molecular weight of maleic anhydride
$M_c$ = molecular weight of apolar comonomer.

**Example II. Manufacturing of component "B"**

In a 1 $dm^3$ volume four necked glass stirring vessel 300 g (1 mol) of rape-seed fatty acid methyl ester with high oleic acid content (over 80 %) with regard to its fatty acid composition is dissolved in 120 g of xylene, then 138 g (1.4 mol) of maleic anhydride and 14 g of di-tert-buthyl-peroxyde are continuously added during 4 hours into the mixture heated to 145°C. After 1.5 hours post reaction the grafting process is finished, and the volatile and unreacted monomers are boiled out of the reaction mixture. 150 g of the manufactured intermediate, characterized by an acid number of 360 mg KOH/g, is weighed in the previous '1 $dm^3$ volume four necked glass stirring vessel, and dissolved in 100 g of toluene, then reacted with n-octyl-amine of an amount related to the carboxylic groups in 0.25 times mol ratio, at 150 °C for 4 hours with continuous boiling out and separation of the reaction water, then the volatile components are boiled out of the reaction mixture at 150 °C and 10 kPa pressure. The acid number of the manufactured end-product is 185 mg KOH/g.

Example III. Manufacturing of polyisobuthylene based component "A"

Into a 2 $dm^3$ volume enamelled autoclave supplied with mixer 500 g of $C_9$-$C_{12}$ aromatic solution (Aromatol), 1000 g (1 mol) of polyisobuthylene (PIB) of high reactivity, containing more than 80 % terminal double bonds are fed, then heated to 150 °C with $N_2$ gas bubbling. Then 247 g of maleic anhydride (2.5 mol), and 630 g (2.5 mol) of n-octadecene, and 2 g of tert-buthyl peroxide are fed into the autoclave within 1 hour in 2-2 equal parts; after finishing the feeding the reaction mixture is boiled out during an additional 4 hours mixing at 150 °C and 5 kPa pressure. The acid number of the manufactured intermediate is 160 mg KOH/g and the average coupling ratio (maleic anhydride rings grafted per PIB molecules) is 2.2. 300 g of the manufactured intermediate is poured into a 1 $dm^3$ glass vessel, heated to 120 °C while stirring, and during 10-10 minutes 46 g of benzyl alcohol and 44 g of diethylene triamine are fed to it. To promote esterification and amide formation reactions, the reaction mixture is heated to 180 °C and refluxed for 6 hours, then the unreacted components and the solvent are boiled out of the reaction mixture at 240 °C and 3 kPa pressure. The nitrogen content of the end-product manufactured in this way is 6.4%.

**Example IV. Compatibilization of plastic mixtures**

2475 g of acrylnitrile butadiene styrene (ABS) copolymer (Melt Flow Index MFI=34 ml/10 min, 220 °C temperature, 10 kg load) and 2475 g of high-impact polystyrene (MFI=7,5-11 ml/1.0 min, 200 °C temperature, 5 kg load) from process waste are mixed in a speed mixer with 50 g of the compatibilizing additive package containing 40 g of component "A" by Example III, 7 g of component "B" by Example II, and 3 g of a commercial styrene-butadiene-styrene (SBS) elastomer with plastifying effect. The mixture is fed into a moulding machine supplied with tool for standard specimen production.

**Example V. Compatibilization of fibre reinforced plastic composites**

A 10 mass percent stock solution is prepared from 10 g of a mixture of component "A" by Example I and component "B" by Example II in a mass ratio of 37:3, and 90 g of xylene; 20 g of carbon fibre is dipped into this solution

and the solvent is removed at 120 °C from the carbon fibre. The carbon fibre impregnated in this way and previously cut is mixed with 400 g of HDPE waste polyethylene by moulding, and then a sheet is made by hot pressing for specimen cutting.

Practical advantages of the additive packages according to this invention described in general examples I-V are presented through definite implementation examples (Tables 1-4). Reagents and their properties are summarized in Table 1 for component "A", and in Table 2 for component "B" of the compatibilizing additive packages. The composition of additive packages is given in Table 3, while Table 4 contains the composition and mechanical properties of the plastic composites made with additive packages of Table 3. Results of measurements with standard test methods and specimens certify that plastic composites prepared with compatibilizing additives according to this invention had better mechanical and elastic properties by 5-100 % - compared to specimens produced without any additive or with commercial additives.

Significant improvement of application properties have been achieved for both thermoplastic plastomers (PP, HDPE, etc.) and elastomer (PVA), and thermosetting composites.

Table 1

| Properties of component "A" in compatibilizing additive pack | | | | | | | | |
|---|---|---|---|---|---|---|---|---|
| Example No | Olefin/polyolefin type (mol) | Comonomers (used for grafting) mol | Acid number of copolymer mg KOH/g | Compound to be acylated (mol/mol-COOH group) | Acid number of component "A" mg KOH/g | N content of component "A" % | MA-olefin-polyolefin coupling ratio | APG/POLG mass ratio |
| A-1 Reference example | $C_{20}\alpha$-olefin(1)(1) | MA(1.2)<br>Styrene(1.2) | 250 | Diethanolamine(0.3)<br>Laurylacohol(0.4)<br>Hexylamine(0.3) | 0.5 | 2.3 | 1.1 | 1.2 |
| A.2 | $C_{22}\alpha$-olefin(1)(2) | MA(2.0)<br>$C_{18}\alpha$-olefin(2.0) | 219 | Catylalcohol(0.2)<br>Buthylamine(0.3)<br>Tetraathylene glycol(0.5) | 0.2 | 1.0 | 1.8 | 0.5 |
| A-3 | $C_{32}\alpha$-olefin(1)(3) | MA(3.0)<br>$C_{10}\alpha$-olefin(3 0) | 283 | - | 298 | - | 2.3 | 0.6 |
| A-4 | $C_{24}\alpha$-olefin(1)(4) | MA(2,5)<br>Styrene(2.5) | 291 | $C_{20}\alpha$-alcohol(0.5)<br>Jeffamin(0.2)<br>Benzylalcohol(0.3) | 0.3 | 1.3 | 1.8 | 1.0 |
| A-5 | PIB-900(1)(6) | MA (3,5)<br>$C_{10}\alpha$-olefin(3.6) | 185 | Diethylenetriamine(0.3)<br>$C_{14}\alpha$-alcohol(0.7) | 0,2 | 2.4 | 2.7 | 1.0 |
| A-6 | PIB-2300(1)(6) | MA(6)<br>$C_{0}\alpha$-olefin(5) | 184 | Octylalcohol(0.6)<br>Triethylene tetramine (0.2) | 0.1 | 7.4 | 3.9 | 3.2 |

(continued)

| Properties of component "A" in compatibilizing additive pack | | | | | | | | |
|---|---|---|---|---|---|---|---|---|
| Example No | Olefin/polyolefin type (mol) | Comonomers (used for grafting) mol | Acid number of copolymer mg KOH/g | Compound to be acylated (mol/mol-COOH group) | Acid number of component "A" mg KOH/g | N content of component "A" % | MA-olefin-polyolefin coupling ratio | APG/POLG mass ratio |
| | | | | Polyethylene glycol - 300(0.2) | | | | |

MA, Maleic anhydride
APG, apolar part
POLG, polar part
PIB, Polylsobuthylene
(1) α-olefin content is 97%
(2) α-olefin content is 95%
(3) α-olefin content is 81%
(4) α-olefin content is 98%
(5) α-olefin content is 85%
(6) α-olefin content is 82%

Table 2

| Properties of component "B" in compatibilizing additive pack | | | | |
|---|---|---|---|---|
| Example | Fatty acid derivatives (mol) | Reagents (mol) | Acylated compound (mol/mol-COOH group) | Acid number of component "B" (mg KOH/g) |
| B-1 | Oleic acid methyl ester(1) | MA(1.2) | $C_{12}\alpha$-alcohol(0.5) | 99 |
| B-2 | Rape-seed fatty acid-methyl ester(1) | MA(1.5) | $C_8\alpha$-alcohol(0.5)<br>Diethanolamine(0.5) | 18 |
| B-3 Reference example | Sunflower oil fatty acid-methyl ester(1) | MA(2.1) | Isobuthanol(0.4)<br>Jeffamin-600(0.5) | 6 |
| B-4 | Rape-seed fatty acid-methyl ester(1) | MA(1.2)<br>Stvrene(1.2) | Ethylenglycol(0.5)<br>Benrylamine(0.5) | 12 |
| B-5 | Oleic acid(1) | MA(1.6)<br>$C_{14}\alpha$-oletin(1.6) | n-Buthylalcohol(0.5)<br>Ttriethanolamine(0.4) | 127 |
| B-6 | Sunflower fatty acid-methyl ester(1) | MA(1.9)<br>Styrene(1.9) | Dodecilamine(2)<br>Glycerine(1) | 28 |

Table 3

| Properties of compatibilizing additive packages manufactured by the patent | | | | | | |
|---|---|---|---|---|---|---|
| Example | Component "A" | | Component "B" | | Other additive concentration % | "A"/"B" mass ratio |
| | Example | Concentration % | Example | Concentration % | | |
| P-1 | A-1 | 80 | B-2 | 9.0 | 1.0 | 10 |
| P-2 | A-2 | 80 | B-1 | 3.0 | 37 | 20 |
| P-3 | A-3 | 80 | B-3 | 2.5 | 17.5 | 32 |
| P-4 | A-4 | 85 | B-6 | 5.0 | 10 | 17 |
| P-5 | A-5 | 97 | B-4 | 3.0 | 0 | 32 |
| P-6 | A-0 | 80 | B-5 | 2.0 | 18 | 40 |
| P-7 Counter example | A-6 | 99 | B-4 | 1.0 | 0 | 99 |

Table 4

| Application examples for plastic composite of additive packs by the patent | | | | | | | | | | | | | |
|---|---|---|---|---|---|---|---|---|---|---|---|---|---|
| Example | Composition of polymer components | | | | | | | Filling material | | Tensile Strength | Bending Strength | Charpy Impact Strength | Elongation at rupture |
| | Additive** | Polymer types, % | | | | | | | | | | | |
| | % | HDPE | EVA | PP | PS | ABS | PE | Type | % | MPa | MPa | kJ/m$^2$ | % |
| G-1* | 2.0 | - | - | - | 49 | 49 | - | - | - | 26.5 | - | 5.7 | 1.5 |
| P-5 | 1.0 | - | - | - | 49.5 | 49.5 | - | - | - | 28.7 | - | 7.1 | 2.6 |
| C-2* | 2.0 | - | - | - | 49 | 49 | - | - | - | 22.3 | - | 20.8 | 284 |
| P-6 | 1.0 | - | - | - | 49.5 | 49.5 | - | - | - | 24.3 | | 22.9 | 284 |
| C-2* | 2.0 | - | - | - | 24 | 74 | | - | | 19.5 | - | 22.3 | 320 |
| P-7 counter example | 2.0 | - | - | - | 24 | 74 | - | - | - | 18 | - | 21.9 | 281 |
| Without additive | 0 | - | - | - | - | - | 100 | Glass fiber met | 35.5±2.4 | 99.4 | 4.8 | 110.0 | 2.5 |
| P.1 | 10 | - | - | - | - | - | 90 | Glass fiber mst | 35.5±2.4 | 117.3 | 10.3 | 131.7 | 2.9 |
| Without additive | 0 | 100 | - | - | - | - | - | Carbon fiber | 0 | 25.3 | 16.0 | 14.0 | 135 |
| P-2 | 5 | 95 | - | - | - | - | - | Carbon fiber | 10 | 31.6 | 26,2 | 15.4 | 11 |
| Without additive | 0 | - | - | 100 | - | - | - | Carbon fiber | 0 | 27.9 | 200 | 5.3 | 248 |
| P-3 | 5 | - | - | 95 | - | - | - | Carbon fiber | 10 | 32.7 | 26.2 | 10.2 | 11 |
| Without additive | 0 | - | 100 | - | - | - | - | Carbon fiber | 0 | 7.4 | 2.0 | - | 133 |

(continued)

| Application examples for plastic composite of additive packs by the patent | | | | | | | | | | | | | | |
|---|---|---|---|---|---|---|---|---|---|---|---|---|---|---|
| Example | Composition of polymer components | | | | | | | Filling material | | Tensile Strength | Bending Strength | Charpy Impact Strength | Elongation at rupture |
| | Additive** | Polymer types, % | | | | | | | | | | | |
| | % | HDPE | EVA | PP | PS | ABS | PE | Type | % | MPa | MPa | kJ/m$^2$ | % |
| P-4 | 5 | - | 95 | - | - | - | - | Carbon fiber | 10 | 10.7 | 9.4 | - | 26 |

*Commercially available compatibilizing additive (LIGOMONT AR 504)
** in reinforced composites the value of concentration means the fibre and additive content together HDPE High density polyethylene
EVA Ethylene vinyl acetate
PP Polypropylene
PS Polystyrene
ABS Acrylonitrile-butadiene-styrene
PE Polyester

## Claims

1. Palyfunctional compatibilizing additive package of low molecular weight and high active material content and polymer structure applicable for plastic and rubber composites, wherein it is composed of
component "A" in 45-97 % which contains of molecules having an apolar (APG) and a polar part (POLG), the APG is an $\alpha$-olefin with average carbon number of $C_{22}$-$C_{36}$ or the mixture of such $\alpha$-olefins, or polyisobutylene having number average molecular weights under $\overline{M}_n$=3000, the POLG is the reaction product of maleic anhydride and hydrocarbon monomer containing olefinic double bonds, and containing 2-4 carboxylic esters, or imide derivative, and at least one free hydroxyl-, or amino-, or imino-, or carboxylic including anhydride group related to an average molecule; and the weight ratio of the apolar and polar parts in the molecules is APG/POLG=0.5-5.0;and
of a reactive component "B" in 1-30 % which contains a reaction product of $C_{16-24}$ fatty acids or fatty acid esters containing at least one olefinic double bond grafted with the copolymer of maleic anhydride and $C_{4-24}$ aliphatic or aromatic hydrocarbon monomer, or their neutralized product obtained by reacting with a polyol, or polyamine, or polyalkylene glycol, or polyalkylene ether amines, alkanol amines having an average molecular weight less than $\overline{M}_n$ =600; or with a two component mixture of these reagents and the mass ratio of components "A" and "B" is between 5-90.

2. Additive package according to Claim 1, wherein the apolar molecular part of component "A" is an $\alpha$-olefins with an average carbon number of $C_{22}$-$C_{36}$ or the mixture of said $\alpha$-olefins containing at least one olefinic double bond, its polar molecular part is the copolymer of $C_4$-$C_{16}$ aliphatic, or aromatic hydrocarbon monomers and maleic anhydride having an average coupling ratio higher than one.

3. Additive package according to Claim 1 and Claim 2, wherein component "B" is the reaction product of a $C_{16}$-$C_{24}$ fatty acid, and/or fatty acid ester, or their mixture containing at least one olefinic double bond per molecule grafted with the copolymer of maleic anhydride and $C_4$-$C_{24}$ aliphatic olefin, or aromatic hydrocarbon, or the partially or totally neutralized form of said product obtained by reacting with a polyol, or polyamine, or polyalkylene glycol, or polyalkylene ether amine alkanol amines having an average molecular weight less than $\overline{M}_n$ =600, or their two or more component mixture, which contains per molecule in average at least one free hydroxyl-and/or amino-, and/or imino-, or carboxylic-, and/or anhydride group.

4. Process for additive package production by Claims 1-3, wherein component "A" is manufactured in one or two main steps; during this reaction $C_{22}$-$C_{36}$ $\alpha$-olefin, or the mixture of such $\alpha$-olefins, or polyisobutylene-containing double bonds in more than 80 % in $\alpha$-position in 20-75 % concentration are applied and is successively reacted with maleic anhydride, and after that the another $C_4$-$C_{16}$ hydrocarbon comonomer containing olefinic double bonds is added in a molar ratio of 1.2-5 at 110-140 °C, at atmospheric pressure, and if needed in $N_2$ atmosphere, and is reacted for 2-10 hours, in the presence of 3-15 % of an organic peroxide initiator related to maleic anhydride, at parameters promoting grafting reactions with copolymers of alternating structure; maleic anhydride and the second hydrocarbon comonomer are fed continuously or batchwise; then the volatile, unreacted components are boiled out of the reaction mixture at 0.1-0.5 kPa pressure, and if needed it is filtered in the presence of a filtration auxiliary material, this reaction product with acidic pH is directly used as compatibilizing material,
or in the second main step is diluted with a solvent containing 10-70 % aromatics and is reacted in the temperature range of 110-180 °C $C_3$-$C_{26}$ $\alpha$-alcohols or alkylamines, or aromatic amines, or alkanol amines, or polyalkylene glycols, or polyalkylene ether amines
" or their two or multi component mixtures at a molar ratio of 0.2-1.0 calculated from the concentration of free carboxylic groups, in the presence of an acidic or basic catalyst, during 2-10 hours with an acid/alcohol or amine molar ratio, that ensures at least one free hydroxyl-, or amino-, or imino group remains per molecule in the reaction product, then the volatile low molecular weight components are boiled out from the obtained reaction mixture in the temperature range of 100-350 °C and in vacuum.

5. Process for additive package production by Claims 1-3, wherein component "B" is manufactured In one or two steps, when in the first step $C_{16}$-$C_{24}$ fatty acid or fatty acid ester containing at least one olefinic double bond is reacted in a molar ratio of 1-2 related to the olefinic double bonds with maleic anhydride, or a mixture of maleic anhydride and a $C_4$-$C_{24}$ aliphatic olefin, or aromatic hydrocarbon monomer containing at least one olefininc double bond, in a molar ratio of the maleic anhydride and the hydrocarbon monomer in aromatic solvent, or without it, in the 100-150 °C temperature range, in the presence of a radical initiator; then the volatile unreacted components are boiled out from the reaction product is used as component "B", or it is partly reacted in the second step in a molar ratio of 0.3-1

related to the free carboxylic groups with reagents of a number average molecular weight less than 600, such as polyol, or polyamine, or polyalkylene glycol, or polyalkylene ether amine, or their two component mixtures, in the presence of a solvent and optionally in the presence of a catalyst, then the volatile unreacted components are boiled out in vacuum between 100-150 °C.

**6.** Additive package by Claims 1-5, wherein component "B" manufactured in one or two steps is mixed with component "A" 1-30 % concentration for the compatibilizing additive package, and with commercial additives having other complementary auxiliary effect, is mixed to the polymer mixture to be compatibilized in 0.01-5 %, or it is used in the form of a solution, or being mixed with other known commercial polymers in a master-batch.

## Patentansprüche

**1.** Polyfunktionelles Verträglichkeitsvermittler-additivpaket mit niedrigem Molekulargewicht und hohem Aktivsubstanzgehalt und Polymerstruktur, das auf Kunststoff- und Kautschukverbundwerkstoffe anwendbar ist, wobei es aus Folgendem besteht:

Komponente "A" in einer Menge von 45-97%, die Moleküle mit einem apolaren Teil (APG) und einem polaren Teil (POLG) enthält, wobei der APG ein α-Olefin mit einer durchschnittlichen Kohlenstoffzahl von $C_{22}$-$C_{36}$ oder die Mischung derartiger α-Olefine oder Polyisobutylen mit zahlenmittleren Molekulargewichten unter $\overline{M}_n$ = 3000 ist, der POLG das Reaktionsprodukt von Maleinsäureanhydrid und Kohlenwasserstoff-Monomer mit olefinischen Doppelbindungen mit 2-4 Carbonsäureestern oder Imidderivat und mindestens einer freien Hydroxylgruppe oder Aminogruppe oder Iminogruppe oder Carbonsäuregruppe einschließlich Anhydridgruppe, bezogen auf ein durchschnittliches Molekül, ist und das Gewichtsverhältnis des apolaren und polaren Teils in den Molekülen APG/POLG = 0,5-5,0 ist; und

einer reaktiven Komponente "B" in einer Menge von 1-30%, die ein Reaktionsprodukt von $C_{16-24}$-Fettsäuren und/oder -Fettsäureestern mit mindestens einer olefinischen Doppelbindung, gepfropft mit dem Copolymer von Maleinsäureanhydrid und aliphatischem oder aromatischem $C_4$-$C_{24}$-Kohlenwasserstoff-Monomer oder ihrem durch Umsetzen mit einem Polyol oder Polyamin oder Polyalkylenglykol oder Polyalkylenetheraminen, Alkanolaminen mit einem durchschnittlichen Molekulargewicht von weniger als $\overline{M}_n$ = 600 erhaltenen neutralisierten Produkt oder mit einer zweikomponentigen Mischung dieser Reagenzien, enthält, wobei das Massenverhältnis der Komponenten "A" und "B" zwischen 5-90 liegt.

**2.** Additivpaket nach Anspruch 1, wobei der apolare Molekülteil von Komponente "A" ein α-Olefin mit einer durchschnittlichen Kohlenstoffzahl von $C_{22}$-$C_{36}$ oder die Mischung derartiger α-Olefine mit mindestens einer olefinischen Doppelbindung ist, sein polarer Molekülteil das Copolymer von aliphatischen oder aromatischen $C_4$-$C_{16}$-Kohlenwasserstoff-Monomeren und Maleinsäureanhydrid mit einem durchschnittlichen Kupplungsverhältnis von mehr als eins ist.

**3.** Additivpaket nach Anspruch 1 und Anspruch 2, wobei Komponente "B" das Reaktionsprodukt einer $C_{16-29}$-Fettsäure und/oder eines $C_{16-24}$-Fettsäureesters oder deren Mischung mit mindestens einer olefinischen Doppelbindung pro Molekül, gepfropft mit dem Copolymer von Maleinsäureanhydrid und aliphatischem $C_4$-$C_{24}$-Olefin oder aromatischem Kohlenwasserstoff oder der durch Umsetzen mit einem Polyol oder Polyamin oder Polyalkylenglykol oder Polyalkylenetheramin Alkanolaminen mit einem durchschnittlichen Molekulargewicht von weniger als $\overline{M}_n$ = 600 oder ihrer zwei- oder mehrkomponentigen Mischung erhaltenen teilweise oder vollständig neutralisierten Form des Produkts, ist, das pro Molekül durchschnittlich mindestens eine freie Hydroxylgruppe und/oder Aminogruppe und/oder Iminogruppe oder Carbonsäuregruppe und/oder Anhydridgruppe enthält.

**4.** Verfahren zur Herstellung eines Additivpakets gemäß den Ansprüchen 1-3, bei dem die Komponente "A" in einem oder zwei Hauptschritten hergestellt wird: bei dieser Reaktion werden $C_{22}$-$C_{36}$-α-Olefin oder die Mischung derartiger α-Olefine oder Polyisobutylen mit Doppelbindungen in mehr als 80% in α-Position in einer Konzentration von 20-75% angewendet und nacheinander mit Maleinsäureanhydrid umgesetzt, wonach das andere olefinische Doppelbindungen enthaltende $C_4$-$C_{16}$-Kohlenwasserstoff-Comonomer in einem Molverhältnis von 1,2-5 bei 110-140°C bei Normaldruck und gegebenenfalls in $N_2$-Atmosphäre zugegeben und in Gegenwart von 3-15% eines organischen Peroxid-Initiators, der mit Maleinsäureanhydrid in Relation steht, bei Parametern, die Pfropfreaktionen mit Copolymeren alternierender Struktur fördern, 2-10 Stunden umgesetzt wird; Maleinsäure-anhydrid und das zweite Kohlenwasserstoff-Comonomer kontinuierlich oder diskontinuierlich zugeführt werden; dann die flüchtigen, nicht umgesetzten Komponenten bei einem Druck von 0,1-0,5 kPa aus der Reaktionsmischung ausgekocht werden und diese gegebenenfalls in Gegenwart eines Filtrationshilfsmaterials filtriert wird, wobei dieses Reaktionsprodukt mit saurem pH-Wert direkt als Verträglichkeitsvermittlermaterial verwendet wird

oder im zweiten Hauptschritt mit einem Lösungsmittel, das 10-70% Aromaten enthält, verdünnt und im Temperaturbereich von 110-180°C mit $C_3$-$C_{26}$-$\alpha$-Alkoholen oder Alkylaminen oder aromatischen Aminen oder Alkanolaminen oder Polyalkylenglykolen oder Polyalkylenetheraminen oder deren zwei- oder mehrkomponentigen Mischungen bei einem Molverhältnis von 0,2-1,0, berechnet aus der Konzentraktion von freien Carboxygruppen, in Gegenwart eines sauren oder basischen Katalysators über einen Zeitraum von 2-10 Stunden mit einem Molverhältnis von Säure/Alkohol oder Amin, das gewährleistet, dass mindestens eine freie Hydroxyl- oder Amino- oder Iminogruppe pro Molekül im Reaktionsprodukt verbleibt, umgesetzt wird, wonach die flüchtigen niedermolekularen Komponenten im Temperaturbereich von 100-350°C und im Vakuum aus der erhaltenen Reaktionsmischung ausgekocht werden.

5. Verfahren zur Herstellung eines Additivpakets gemäß den Ansprüchen 1-3, bei dem die Komponente "B" in einem oder zwei Schritten hergestellt wird, wenn im ersten Schritt $C_{16-24}$-Fettsäure und/oder -Fettsäureester mit mindestens einer olefinischen Doppelbindung in einem Molverhältnis von 1-2, bezogen auf die olefinischen Doppelbindungen, mit Maleinsäureanhydrid oder einer Mischung von Maleinsäureanhydrid und einem aliphatischen $C_4$-$C_{24}$-Olefin oder aromatischen Kohlenwasserstoff-Monomer mit mindestens einer olefinischen Doppelbindung in einem Molverhältnis des Maleinsäureanhydrids und des Kohlenwasserstoff-Monomers in einem aromatischen Lösungsmittel oder ohne dieses im Temperaturbereich von 100-150°C in Gegenwart eines Radikalinitiators umgesetzt wird und dann die flüchtigen nicht umgesetzten Komponenten aus dem Reaktionsprodukt ausgekocht werden und dieses als Komponente "B" verwendet wird oder im zweiten Schritt in einem Molverhältnis von 0,3-1, bezogen auf die freien Carboxygruppen, teilweise mit Reagenzien mit einem zahlenmittleren Molekulargewicht von weniger als 600, wie Polyol oder Polyamin oder Polyalkylenglykol oder Polyalkylenetheramin oder deren zweikomponentigen Mischungen in Gegenwart eines Lösungsmittels und gegebenenfalls in Gegenwart eines Katalysators umgesetzt wird und dann die flüchtigen nicht umgesetzten Komponenten im Vakuum zwischen 100-150°C aus dem Reaktionsprodukt ausgekocht werden.

6. Additivpaket nach den Ansprüchen 1-5, wobei die in einem oder zwei Schritten hergestellte Komponente "B" in einer Konzentration von 1-30% für das Verträglichkeitsvermittleradditivpaket mit der Komponente "A" und mit kommerzielle Additiven mit anderer komplementärer Hilfswirkung gemischt wird und in einer Menge von 0,01-5% zu der zu kompatibilisierenden Polymermischung gemischt wird oder in Form einer Lösung verwendet wird oder in einem Masterbatch mit anderen bekannten kommerziellen Polymeren gemischt wird.

## Revendications

1. Ensemble d'adjuvants compatibilisants polyfonctionnels de faible masse moléculaire, de teneur élevée en matières actives et de structure polymère, applicable à des composites de plastique et de caoutchouc, composé

d'un composant « A » à hauteur de 45 à 97 % qui contient des molécules présentant une partie apolaire (APG) et une partie polaire (POLG), l'APG étant une $\alpha$-oléfine de nombre moyen de carbone compris entre $C_{22}$ et $C_{36}$ ou le mélange de telles $\alpha$-oléfines, ou un polyisobutylène de masse moléculaire moyenne en nombre inférieure à $M_n$ = 3000, la POLG étant le produit de réaction de l'anhydride maléique et d'un monomère hydrocarboné contenant des doubles liaisons oléfiniques, et comportant 2 à 4 esters carboxyliques, ou un dérivé imide, et au moins un groupement hydroxyl-, amino-, imino-, ou carboxylique y compris anhydride par rapport à une molécule moyenne ; et le rapport massique des parties apolaire et polaire dans les molécules est APG/POLG = 0,5 à 5,0 ; et

d'un composant réactif « B » à hauteur de 1 à 30 % qui contient un produit de réaction d'acides gras ou d'ester d'acides gras en $C_{16-24}$ contenant au moins une double liaison oléfinique greffée au copolymère d'anhydride maléique et de monomère hydrocarboné aliphatique ou aromatique en $C_{4-24}$, ou leur produit neutralisé obtenu par réaction avec un polyol, une polyamine, un polyalkylène glycol, ou des polyalkylène étheramines, des alcanolamines de masse moléculaire moyenne inférieure à $M_n$ = 600 ; ou avec un mélange bicomposant de ces réactifs, le rapport massique des composants « A » et « B » étant compris entre 5 et 90.

2. Ensemble d'adjuvants selon la Revendication 1, où à partie moléculaire apolaire du composant « A » est une $\alpha$-oléfine de nombre moyen d'atomes de carbone compris entre $C_{22}$ et $C_{36}$ ou le mélange de telles $\alpha$-oléfines contenant au moins une double liaison oléfinique, sa partie moléculaire polaire est le copolymère de monomères hydrocarbonés aromatiques ou aliphatiques en $C_4$-$C_{16}$ et de l'anhydride maléique présentant un rapport de couplage moyen supérieur à un.

3. Ensemble d'adjuvants selon la Revendication 1 et la Revendication 2, où le composant « B » est le produit de réaction d'un acide gras en $C_{16}$-$C_{24}$ et/ou d'un ester d'acide gras, ou leur mélange contenant au moins une double liaison oléfinique par molécule greffée au copolymère d'anhydride maléique et d'une oléfine aliphatique en $C_4$-$C_{24}$, ou d'un hydrocarbure aromatique, ou la forme partiellement ou totalement neutralisée dudit produit obtenue par réaction avec un polyol, une polyamine,, un polyalkylène glycol, ou des polyalkylène étheramines alcanolamines de masse moléculaire moyenne inférieure à $M_n$ = 600, ou leur mélange à deux composants ou plus, qui contient en moyenne par molécule au moins un groupement libre hydroxyl- et/ou amino-, et/ou imino-, ou carboxylique, et/ou anhydride.

4. Procédé de production d'un ensemble d'adjuvants selon les Revendications 1 à 3, où le composant « A » est fabriqué en une ou deux étapes principales ; pendant cette réaction, une $\alpha$-oléfine en $C_{22}$-$C_{36}$, le mélange de telles $\alpha$-oléfines, ou un polyisobutylène contenant des doubles liaisons à plus de 80 % en position $\alpha$ dans une proportion de 20 à 75 % est appliqué et réagit successivement avec l'anhydride, maléique, puis l'autre comonomère hydrocarboné en $C_4$-$C_{16}$ contenant des doubles liaisons oléfiniques est ajouté dans un rapport molaire de 1,2 à 5 à 110-140 °C, à pression atmosphérique, et si nécessaire sous atmosphère de $N_2$, et la réaction est poursuivie pendant 2 à 10 heures, en présence de 3 à 15 % d'un initiateur de type peroxyde organique lié à l'anhydride maléique, dans des conditions favorisant les réactions de greffage avec des copolymères de structure alternée ; l'anhydride maléique et le deuxième comonomère hydrocarboné sont introduits en continu ou par lots ; puis les composants volatils n'ayant pas réagi sont éliminés du mélange réactionnel par ébullition à une pression de 0,1 à 0,5 kPa, et si nécessaire, celui-ci est filtré en présence d'une substance auxiliaire de filtration, puis ce produit de réaction à pH acide est directement utilisé comme matière compatibilisante,
ou est dilué dans la deuxième étape principale par un solvant contenant 10 à 70 % de substances aromatiques et réagit dans un intervalle de température de 110 à 180 °C avec des $\alpha$-alcools en $C_3$-$C_{26}$ ou des alkylamines, des amines aromatiques, des alcanolamines, des polyalkylène glycols, ou des polyalkylène étheramines ou leurs mélanges à deux composants ou plus dans un rapport molaire de 0,2 à 1,0 calculé à partir de la concentration des groupements carboxyliques libres, en présence d'un catalyseur acide ou basique, pendant 2 à 10 heures avec un rapport molaire d'acide/alcool ou d'aminé garantissant qu'au moins un groupement hydroxyl-, amino-, ou imino reste dans chaque molécule du produit de réaction, puis les composants volatils de faible masse moléculaire sont éliminés par ébullition du mélange réactionnel obtenu dans un intervalle de température de 100 à 350 °C et sous vide.

5. Procédé de production d'ensemble d'adjuvants selon les Revendications 1 à 3, où le composant « B » est fabriqué en une ou deux étapes, où dans la première étape un acide gras ou un ester d'acide gras en $C_{16}$-$C_{24}$ comportant au moins une double liaison oléfinique réagit dans un rapport molaire de 1 à 2 par rapport aux doubles liaisons oléfiniques avec l'anhydride maléique, ou un mélange d'anhydride maléique et d'une oléfine aliphatique en $C_4$-$C_{24}$, ou d'un monomère hydrocarboné aromatique contenant au moins une double liaison oléfinique, dans un rapport molaire de l'anhydride maléique et du monomère hydrocarboné dans un solvant aromatique, ou sans celui-ci, dans un intervalle de température de 100 à 150 °C, en présence d'un initiateur radicalaire ; puis les composants volatils n'ayant pas réagi sont éliminés du produit réactionnel par ébullition et celui-ci est utilisé en tant que composant « B », ou réagit partiellement dans la deuxième étape dans un rapport molaire de 0,3 à 1 par rapport aux groupements carboxyliques libres avec des réactifs de masse moléculaire moyenne en nombre inférieure à 600, tels que polyol, polyamine, polyalkylène glycol, ou polyalkylène étheramine, ou leurs mélanges bicomposants, en présence d'un solvant et éventuellement en présence d'un catalyseur, puis les composants volatils n'ayant pas réagi sont éliminés par ébullition sous vide entre 100 et 150 °C.

6. Ensemble d'adjuvants selon les Revendications 1 à 5, où le composant « B » fabriqué en un ou deux étapes est mélangé au composant « A » dans une proportion de 1 à 30 % pour l'ensemble d'adjuvants compatibilisants, et avec des adjuvants commerciaux présentant d'autres effets auxiliaires complémentaires, est mélangé au mélange polymère à compatibiliser à hauteur de 0,01 à 5 %, ou il est utilisé sous la forme d'une solution, ou encore, est mélangé à d'autres polymères commerciaux connus dans un mélange maître.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5959032 A
- US 5414081 A
- US 6451919 B
- US 6469099 B, H. Farah
- EP 1275670 A1, S. Moriya